Europäisches Patentamt

European Patent Office

Office européen des brevets

(11) Veröffentlichungsnummer: **0 051 230**
**B1**

(12) # EUROPÄISCHE PATENTSCHRIFT

(45) Veröffentlichungstag der Patentschrift:
04.07.84

(21) Anmeldenummer: 81108847.5

(22) Anmeldetag: 24.10.81

(51) Int. Cl.³: **C 08 J 3/06, C 08 L 1/02,**
**A 23 L 1/04, A 61 K 7/48**

(54) **Mikrofibrillierte Cellulose enthaltende Suspensionen und Verfahren zur Herstellung.**

(30) Priorität: 31.10.80 US 202740
31.10.80 US 202741

(43) Veröffentlichungstag der Anmeldung:
12.05.82 Patentblatt 82/19

(45) Bekanntmachung des Hinweises auf die Patenterteilung: 04.07.84 Patentblatt 84/27

(84) Benannte Vertragsstaaten:
CH DE FR GB IT LI NL SE

(56) Entgegenhaltungen:
DE-A- 2 729 370
GB-A- 566 143
GB-A- 2 066 145
ABSTRACT BULLETIN OF THE INSTITUTE OF PAPER CHEMISTRY, Band 51, Nr. 2, August 1980, Seite 263, Zusammenfassung Nr. 2321 Appleton, Wisconsin, U.S.A. R.A. SOLONITSYN et al.: "Method of processing fibrous materials"

(73) Patentinhaber: Deutsche ITT Industries GmbH
Hans-Bunte-Strasse 19 Postfach 840
D-7800 Freiburg (DE)
DE
ITT INDUSTRIES INC.
320 Park Avenue
New York, NY 10022 (US)
CH FR GB IT LI NL SE

(72) Erfinder: Turbak, Albin Frank
7 Fairfield Drive
Convent Station N.J. 07961 (US)
Erfinder: Snyder, Fred William
35 Pine Street
Wharton, N.J. 07885 (US)
Erfinder: Sandberg, Karen Rover
Olympic Highway
South Shelton, Washington 98584 (US)

(74) Vertreter: Stutzer, Gerhard, Dr.
Deutsche ITT Industries GmbH Patent- und Lizenzabteilung Hans-Bunte-Strasse 19 Postfach 840
D-7800 Freiburg (DE)

**Beschreibung**

Die Erfindung betrifft stabile, homogene, mikrofibrillierte Cellulose enthaltende Suspensionen und Verfahren zu deren Herstellung.

In der DE-A-3 047 351 wird eine neue mikrofibrillierte Cellulose genannte Celluloseart beschrieben, die sich von den herkömmlichen Cellulosen durch erheblich vergrößerte Oberfläche, größere Lösungsabsorbtionseigenschaften und erhöhte Reaktivität unterscheidet. Zur Herstellung dieser Celluloseart läßt man eine Suspension faserförmiger Cellulose wiederholt einen Hochdruckhomogenisator passieren, bis die Cellulosesuspension stabil ist. Das Verfahren verwandelt die eingesetzte Cellulose ohne wesentliche chemische Veränderung in mikrofibrillierte Cellulose.

Die Aufgabe der Erfindung besteht in der Bereitstellung stabiler homogener Suspensionen mit einem Gehalt an mikrofibrillierter Cellulose. Die Lösung dieser Aufgabe ist in den Ansprüchen gekennzeichnet.

Die mikrofibrillierte Cellulose, wie sie in der vorliegenden Erfindung verwendet werden kann, ist als Cellulose definiert mit einem Wasserrückhaltevermögen von über 280 %, einem Absetzvolumen nach 60 Minuten in einer 0,5 gew.%igen Suspension in Wasser von mehr als 60 % und einer durch Hydrolyse bei 60 °C in einer einmolaren Salzsäure gesteigerten Abbaurate von mindestens dem doppelten Wert wie bei Cellulose, die einem Mahlgrad von 50 ml (kanadischer Standardmahlgrad) aufweist.

Es hat sich gezeigt, daß die mikrofibrillierte Cellulose die einmalige Fähigkeit besitzt, Homogenität und Stabilität einer Vielzahl von Suspensionen zu erhöhen. Man hat ferner festgestellt, daß ihre Anwesenheit in solchen Suspensionen, wie sie in Lebensmitteln, kosmetischen und pharmazeutischen Erzeugnissen, Industrieprodukten wie Farben und in Borschlamm Verwendung finden, dem resultierenden Produkt eine Reihe ungewöhnlicher Eigenschaften verleiht. Die mikrofibrillierte Cellulose läßt sich in situ in der Suspension in einem einstufigen Prozeß dadurch herstellen, daß man faserförmige Cellulose mit dem Bestandteilen der Suspension mischt und die Mischung dann einen Homogenisator passieren läßt. Man kann auch wahlweise die mikrofibrillierte Cellulose getrennt herstellen und der fertigen Suspension zufügen.

Die Erfindung umfaßt im wesentlichen Suspensionen und deren Herstellung aus fein verteiltem Material in einer suspendierenden Flüssigkeit, die Cellulose zum Quellen bringt, wobei die Suspension mikrofibrillierte Cellulose in einer zur Erzeugung einer stabilen homogenen Suspension ausreichenden Menge enthält. Die Herstellung der jeweiligen Suspension erfolgt in situ durch Mischen einer cellulosequellenden Flüssigkeit, fein verteiltem in der Flüssigkeit suspendierten Material und faserförmiger Cellulose, wobei man die entstandene Suspension wiederholt eine schmale Öffnung passieren läßt, in der die Mischung einen Druckabfall von mindestens 22 685 kPa erleidet sowie einer Scherwirkung bei hoher Geschwindigkeit und einem nachfolgenden, die hohe Geschwindigkeit herabsetzenden Anprall ausgesetzt wird. Die mikrofibrillierte Cellulose liegt dabei in der oben angegebenen Menge vor. Wahlweise kann auch die Suspension so hergestellt werden, daß die zum Quellen der Cellulose verwendete Flüssigkeit, das in der Flüssigkeit suspendierte, fein zerteilte Material und die für sich getrennt hergestellte mikrofibrillierte Cellulose gemischt werden, wobei wiederum die Cellulose in einer zur Ausbildung einer homogenen stabilen Suspension ausreichenden Menge vorliegt. Die Herstellung der mikrofibrillierten Cellulose und der Suspension in einem Einstufenverfahren bringt also offensichtlich eine Kostenersparnis. Zusätzlich ist in bestimmten Fällen durch die Anwendung des Einstufenverfahrens ein Vorteil für das Produkt gegeben. Bei manchen Produkten ist allerdings die Entstehung von Wärme, die den Prozeß der Fibrillierung begleitet, nachteilig und deshalb bei solchen hitzeempfindlichen Systemen die getrennte Herstellung der mikrofibrillierten Cellulose vorzuziehen. Dabei können sich die Eigenschaften bestimmter Produkte von denen der gleichen Produkte, die aus denselben Bestandteilen unter Zuhilfenahme getrennt erzeugter mikrofibrillierter Cellulose erzeugt wurden, unterscheiden.

Der in der Anmeldung gebrauchte Ausdruck Suspension umfaßt Suspensionen, denen ein fein zerkleinerter Feststoff, eine Flüssigkeit oder ein Gas ungelöst mit einer Flüssigkeit gemischt sind. Der Ausdruck umfaßt somit auch eine Emulsion, bei der eine Flüssigkeit in einer zweiten mit ihr nicht mischbaren Flüssigkeit dispergiert ist, und schließt ferner einen Schaum ein, bei dem ein Gas in der Flüssigkeit eingeschlossen und stabilisiert ist.

Die Menge der bei der Herstellung der Suspension nach der Erfindung verwendeten mikrofibrillierten Cellulose variiert in Abhängigkeit von der Art der beabsichtigten Verwendung der Suspension. Es hat sich z. B. gezeigt, daß Emulsionen von Öl in Wasser durch einen Zusatz von 1 Gew.% oder weniger an mikrofibrillierter Cellulose stabilisiert werden können. Farbsuspensionen auf Latexbasis lassen sich mit einem so geringen Anteil wie 0,25 Gew.% mikrofibrillierter Cellulose verbessern, während Sand enthaltende Suspensionen 2 bis 3 Gew.% davon erfordern. Das andere Extrem liegt dann vor, wenn mikrofibrillierte Cellulose als Hauptbestandteil der Suspension vorhanden ist. Ganz allgemein sollte die mikrofibrillierte Cellulose in einer solchen Menge vorliegen, daß sie ihre Funktion als ein eine stabile homogene Suspension erzeugendes Mittel erfüllt. Für die meisten Anwendungen liegt diese Menge zwischen 0,25 und 5 Gew.% bezogen auf das Gesamtgewicht der Suspension.

Die Herstellung einer stabilen homogenen Suspension unter Einbeziehung von mikrofibrillierter Cellulose läßt sich durch den Zusatz von hydrophilem Polymer wie z. B. Celluloseester oder -äther, synthetischem Säurepolymer (oder Copolymer), Naturkautschuk oder Stärke unterstützen. Beispiele

2

derartiger hydrophiler Polymere sind Carboxymethylcellulose, Methylcellulose, Hydroxypropylcellulose, Polyacrylsäure, Karagenin und Guagummi. Der Zusatz des hydrophilen Polymers zu dem flüssigen, suspendierenden Medium vor Zugabe des Cellulosezellstoffs scheint die Entwässerung des letzteren (oder anderer faserförmiger Cellulose), bei den hohen Drücken des Fibrillationsprozesses zu verhindern und ermöglicht so ein Durchgang der Aufschlämmung durch den Homogenisator unter Anwendung höherer Konzentrationen. Darüberhinaus zeigt die mit den Zusätzen erzeugte mikrofibrillierte Cellulose verbesserte Einfrier-Auftaustabilität und einen verbesserten Entwässerungswiderstand unter Druck und liefert somit verbesserte Suspensionen bei solchen Produkten, wo eine bestimmte Geschmeidigkeit wichtig ist, wie z. B. Handcreme, Kosmetika und Farben. Das hydrophile Polymer verbessert den Fibrillierungsprozeß bei einer Zusatzmenge von nur 0,1 Gew.%, bezogen auf die Suspension, kann jedoch in Abhängigkeit von der Art der Suspension in Mengen bis zu 25 Gew.% eingesetzt werden.

Die mikrofibrillierte Cellulose eignet sich auch besonders zum Eindicken, als Geschmacksträger und Stabilisator von Suspensionen bei einer Vielzahl von Nahrungsmitteln. Dabei können eine Vielzahl mikrofibrillierter Cellulose enthaltende Nahrungsmittel wie oben in einem Einstufenverfahren hergestellt werden, indem die Cellulose in situ während der Herstellung des letzteren gebildet wird. Die Bestandteile des Nahrungsmittels werden dabei der ursprünglichen, faserförmigen Cellulose enthaltenden Aufschlämmung vor der Fibrillierung zugefügt. Das Verfahren eignet sich besonders zur Herstellung von Füllungen, Suppen, Fleischsäften, Pudding, Saucen, Kuchenüberzügen und anderen Nahrungsmitteln. Dabei ist selbstredend darauf zu achten, daß die Flüssigkeit, mit deren Hilfe die Cellulose zum Quellen gebracht wird, für den menschlichen Genuß geeignet ist. Das genießbare, flüssige suspendierende Medium kann Wasser oder eine andere Flüssigkeit sein, die Cellulose benetzt oder zum Quellen bringt. Flüssigkeiten, die Cellulose nicht zum Quellen bringen, können zwar anwesend sein, sie können jedoch nicht als suspendierendes Medium verwendet werden, da die Cellulose in Abwesenheit einer sie zum Quellen bringenden Flüssigkeit nicht hergestellt werden kann. Andere, neben Wasser geeignete Flüssigkeiten sind genießbare niedrige Alkohole wie z. B. Äthylalkohol, Glyzerin und Propylenglykol.

Der Anteil der Cellulose in der Ausgangsaufschlämmung oder -Suspension hängt neben anderen Faktoren von der Faser- größe der eingesetzten Cellulose und der Größe des Homogenisators oder der Einrichtung, in der die Fibrillierung durchgeführt wird ab. Größere Homogenisatoren und kleinere Teilchengröße oder kürzere Faserlänge der Ausgangscellulose erlauben eine höhere Cellulosekonzentration. Wie schon oben erwähnt, läßt sich die Cellulosekonzentration durch ein hydrophiles Polymer steigern.

Als Nahrungsmittel dienende Zusätze können entweder flüssige Nahrungsmittel oder fein zerkleinerte feste Nahrungsmittel eingesetzt werden, die mit der Cellulose eine genießbare Mischung oder Suspension bilden. Als Beispiele hierfür seien genannt : Fruchtsäfte, Fruchtsaftkonzentrate, Hühner- and Rindfleischbouillon, natürliche Pflanzensäfte und entfettete Trockenmilch mit oder ohne Zusatz von verschiedenen Aromastoffen, Süßstoffen und andern hinlänglich bekannten Nahrungsmittelzusätzen.

Die Erfindung wird anschließend anhand einer Reihe von Beispielen näher erläutert. Wenn nicht anders angegeben, sind die Teile- und Prozentangaben auf das Gewicht bezogen.

## Beispiel 1

Eine 4 %ige Celluloseaufschlämmung in ca. 8,4l Wasser wurde unter Verwendung von vorhydrolysiertem Kraftzellstoff hergestellt, der auf eine Teilchengröße von weniger als 0,32 cm lichte Maschenweite zerkleinert war. Die Ausgangstemperatur der Aufschlämmung betrug 25 °C. Man ließ sie 10 mal hintereinander bei 55 120 kPa einen Homogenisator passieren bis eine stabile Suspension bzw. ein stabiler Gelpunkt erreicht war.

Mikrofibrillierte Cellulose kann zur Einstellung des Fließverhaltens von Farbe und zur Reduzierung des Tropfens verwendet werden. Zusätzlich unterstützt die mikrofibrillierte Cellulose bei der Abdeckung der zu streichenden Oberfläche, d. h. also sie erhöht die Deckfähigkeit der Farbe und reduziert somit den erforderlichen Gehalt an Titandioxid-Pigment. Dies wird durch die Beispiele 2 bis 7 erläutert.

## Beispiele 2 bis 7

Die mikrofibrillierte Cellulose nach Beispiel 1 wurde als 4 %ige Aufschlämmung in Wasser einer käuflichen weißen Latexfarbe zugefügt. Ein Vergleich der Tropfenlänge der Farbe bei unterschiedlichen Feststoffanteilen mit und ohne verschiedenen Prozentgehalten an zugesetzter mikrofibrillierter Cellulose ist in Tabelle I aufgeführt.

Aus der Tabelle I wird deutlich, daß bereits eine Menge von nur 0,25 % an mikrofibrillierter Cellulose das Tropfen der Farbe verringert und daß bei einem Gehalt von 1 % das über die Tropfenlänge bestimmte Tropfen ein Drittel von dem ausmacht, das bei entsprechender Gewichtsmenge mit Farbe ohne mikrofibrillierte Cellulose auftritt.

Mikrofibrillierte Cellulose wirkt als nichtionischer Emulgator ebenso wie als Stabilisator für Emulsionen. Dies wird durch die folgenden Beispiele verdeutlicht.

## Beispiele 8 bis 16

Eine Aufschlämmung von 4,7 % mikrofibrillierter Cellulose in Wasser wurde gemäß Beispiel 1 aus Sulfitzellstoff hergestellt. Die Aufschlämmung wurde dann innig mit Sojabohnenöl (für den menschlichen Genuß bestimmt) und zusätzlichem Wasser in einem Mischer vermengt. Die Tabelle II enthält die Resultate einer Reihe von Experimenten mit und ohne mikrofibrillierter Cellulose und mit unterschiedlichen Mengen an mikrofibrillierter Cellulose, Öl und zugesetztem Wasser, aus denen eine Emulsion von Öl in Wasser hergestellt wurde.

### Tabelle I

(MFC = mikrofibrillierte Cellulose)

| Beisp. | % MFC | % Pigment | % Feststoff | % Träger | Tropfen-länge cm |
|---|---|---|---|---|---|
| 2 | 0 | 15,97 | 15,97 | 84,03 | 22,35 |
| 3 | 0,25 | 15,72 | 15,97 | 84,03 | 20,83 |
| 4 | 0 | 15,84 | 15,34 | 84,66 | 21,60 |
| 5 | 0,50 | 14,84 | 15,34 | 84,66 | 15,24 |
| 6 | 0 | 14,06 | 14,06 | 85,92 | 30,48 |
| 7 | 1,0 | 13,06 | 14,06 | 85,93 | 10,16 |

### Tabelle II

| Beispiel | MFC Aufschläm-mung in Gramm | Öl Gramm | Wasserzusatz in Gramm | % MFC | % Öl | Ergebnis |
|---|---|---|---|---|---|---|
| 8 | 0 | 40 | 160 | 0 | 20 | keine stabile Emulsion |
| 9 | 10,6 | 40 | 150 | 0,25 | 20 | Emulsion |
| 10 | 25 | 44 | 150 | 0,54 | 20 | Emulsion |
| 11 | 40 | 40 | 120 | 0,94 | 20 | stabile Emulsion |
| 12 | 40 | 80 | 80 | 0,94 | 40 | stabile Emulsion |
| 13 | 70 | 251 | 30 | 0,94 | 71,5 | stabile Emulsion |
| 14 | 50 | 64 | 51 | 1,42 | 38,8 | stabile Emulsion |
| 15 | 85 | 176 | 15 | 1,45 | 63,8 | stabile Emulsion |
| 16 | 85 | 100 | 15 | 2,0 | 50 | stabile Emulsion |

Aus den Zahlen der Tabelle II geht hervor, daß geringe Mengen an mikrofibrillierter Cellulose in der Lage sind, Emulsionen mit einem Ölgehalt bis zu 71,5 % zu stabilisieren.

## Beispiel 17

Um zu zeigen, daß stabile Emulsionen in situ hergestellt werden können (ohne getrennte Erzeugung von mikrofibrillierter Cellulose) wurde eine 20 gew.%ige stabile Emulsion aus 80 Gramm Cellulose mit einer Teilchengröße unter 0,32 cm, 800 Gramm Speiseöl und 3 112 Gramm Wasser hergestellt. Die Mischung ließ man dann 10 mal bei 55 120 kPa einen Homogenisator passieren. Die fertige Emulsion enthielt ca. 2 % mikrofibrillierte Cellulose und war beim Stehenlassen bei Zimmertemperatur mindestens 6 Monate stabil.

Mikrofibrillierte Cellulose eignet sich auch zur Verwendung in verhältnismäßig geringen, wirtschaftlichen Mengen zur Herstellung stabiler Emulsionen von Feststoffen hoher Dichte wie Sand oder Kohle, wenn letztere als Kohleaufschlämmung durch eine Rohrleitung gepumpt werden soll. Die folgenden Beispiele zeigen die Zweckmäßigkeit der Anwendung von mikrofibrillierter Cellulose als « Packungsflüssigkeit » der Art, wie sie zur Verhinderung des Absetzens von suspendiertem Material beim Abstellen von Bohrvorgängen verwendet wird.

## Beispiel 18

Eine 28 %ige Suspension von Zellstoff (Teilchengröße unter 0,32 cm) in Wasser wurde als Vergleich hergestellt. Zu 100 Gramm dieser Suspension wurden ca. 10 Gramm gewöhnlicher Sand zugefügt. Die Mischung wurde geschüttelt und stehengelassen. Wie erwartet setzte sich der Sand rasch am Boden ab, die Bildung einer Suspension wurde nicht bemerkt.

## Beispiel 19

Zu einer Probe von 100 Gramm der 2 %igen Aufschlämmung von mikrofibrillierter Cellulose in Wasser wurde ca. 10 Gramm Sand zugefügt und die Mischung geschüttelt. Der Sand blieb über 3 Monate suspendiert. Zum Unterschied von den meisten durch Polymere eingedickten Suspensionen blieb die vorliegende Suspension auch beim Erhitzen auf 100 °C stabil.

Bei einem zweiten Versuch wurde eine Sandschicht auf einer Schicht aus mikrofibrillierter Cellulose aufgebracht. Auch dabei setzte sich über einige Monate hinweg der Sand nicht durch die mikrofibrillierte Cellulose ab und drang nicht merklich in sie ein.

Mikrofibrillierte Cellulose kann somit in geringen Konzentrationen (2 bis 3 %) angewendet werden und ist deshalb kostengünstig in der Anwendung bei Bohrungen und zur Erhöhung der Stabilität von Suspensionen von Feststoffen mit relativ großer Dichte.

Es besteht derzeit ein verstärktes Interesse in der Lebensmittelindustrie an der Verwendung von Gummiharzen oder anderen Ölersatzstoffen zur Herstellung von « nichtöligen Salatdressings ». Es hat sich gezeigt, daß man mikrofibrillierte Cellulose bei der Herstellung von Salatdressing mit geringem Kaloriengehalt anstelle von Öl verwenden kann. Das beim Mischen einer käuflichen italienischen Dressingmischung erhaltene Produkt liefert eine stabile Suspension von Gewürzen, die gleichmäßig in der Mischung verteilt sind. Eine bestimmte käufliche Mischung mit mikrofibrillierter Cellulose ergibt eine cremige stabile Suspension ähnlich der Struktur der auf Ölbasis hergestellten Suspensionen gleicher Art. Die italienischen Salatdressings, die man zu kaufen bekommt, erfordern ein kräftiges Schütteln vor dem Gebrauch. Bei einem mit mikrofibrillierter Cellulose hergestelltem Produkt ist dies nicht erforderlich.

## Beispiel 20

Eine Essiglösung wurde nachgeahmt durch Herstellung einer 5 %igen Essigsäurelösung. 55 ml davon wurden zu 25 ml Wasser in ein Ölfläschchen gegeben. Das Öl war durch 150 ml einer 1,7 %igen Lösung von mikrofibrillierter Cellulose ersetzt. Getrocknete italienische Salatmischung wurde zugefügt und das Ganze gründliche geschüttelt. Man erhielt eine stabile Dispersion der Gewürze. Die Farbe und die Beschaffenheit des Materials ähnelt sehr einer wirklichen italienischen Salatsauce.

Zu Vergleichswecken wurde die entsprechende Menge (2,6 Gramm) Zellstoff von einer Teilchengröße unter 0,32 cm der gleichen oben verwendeten Zusammensetzung anstelle der mikrofibrillierten Cellulose zugefügt. Der Zellstoff setzte sich rasch ab und die Gewürze wurden nicht suspendiert.

## Beispiel 21

Eine käufliche trockene Saucenpulvermischung « Thousend Islands Dressing Mix » wurde durch ca. 225 ml einer 2 %igen Aufschlämmung von mikrofibrillierter Cellulose in Wasser zugefügt und gut damit vermischt. Man erhielt eine glatte Konsistenz, die ganz der einer normalen Salatsauce dieser Art entsprach. Die Suspension war gegenüber dem Absetzen stabil.

Die folgenden Beispiele zeigen weitere Verwendungsmöglichkeiten der mikrofibrillierten Cellulose als Hilfsmittel zur Emulgierung von Ölen oder Fetten in Lebensmitteln.

## Beispiel 22

Eine 1 %ige Aufschlämmung von mikrofibrillierter Cellulose wurde einer gemahlenen Schweinswurstmischung in einer Menge zugefügt, die 0,2 Gew.% Gesamtcellulose bezogen auf das Gewicht des Endproduktes entsprach. Nach dem Ausbraten war eine merklich geringere Schrumpfung der Wurst zu bemerken und es bildete sich weit weniger Fett im Vergleich zu der gleichen gemahlenen Mischung ohne Zusatz von mikrofibrillierter Cellulose.

## Beispiel 23

Eine Aufschlämmung von 2,5 % mikrofibrillierter Cellulose in Wasser wurde zerkleinerten, für Hamburgers vorgesehenen Fleischstücken zugefügt, wobei das Verhältnis von Aufschlemmung zu Fleisch 1/3 : 2/3 betrug. Es resultierte ein Produkt, dem bezogen auf das Gewicht des Endproduktes 0,83 % Cellulose zugefügt war, d. h. 27 Gramm Fleisch für Hamburgers war 12,67 Gramm Wasser und 0,33 Gramm Cellulose zugesetzt. Nach dem Kochen blieben 24 Gramm zurück, d. h. der Verlust betrug 3 Gramm gegenüber den ursprünglichen 27 Gramm, was einen Gewichtsverlust beim Braten von 11 % ausmacht. Zum Vergleich, ein Kontrollgewicht von 40 Gramm endete bei 26 Gramm nach dem gleichen Bratbedingungen, was einen Verlust von 34 % entspricht. Nicht nur, daß die mikrofibrillierter Cellulose enthaltende Hamburger weniger Gewichtsverlust zeigten, sie waren auch weit saftiger und besaßen nicht den ausgesprochenen Mehlgeschmack der Vergleichsprobe. Der Zusatz von 0,83 % Cellulose dient somit sowohl der Verringerung des Gewichtsverlustes beim Kochen, wie der Verbesserung des Gesamtgeschmackes des Endproduktes.

Beispiel 24

Eine auf 2 %ige Aufschlämmung von mikrofibrillierter Cellulose in Wasser wurde einer käuflichen Fleischemulsion zugesetzt, wie sie zur Herstellung von « Hot dogs » Verwendung findet. Der Gehalt an Cellulose betrug 2 % bezogen auf das Gesamtgewicht des Endproduktes. Nach dem Stopfen, Räuchern und Kochen besaßen die resultierenden Wiener einen saftigen Geschmack und das Rückhaltevermögen für den Räuchergeschmack war ebenfalls verbessert im Vergleich zu entsprechenden keine mikrofibrillierte Cellulose enthaltenden Wienerwürstchen. Darüberhinaus bildet sich merklich weniger Fettkügelchen im Endprodukt aus. Der Geschmack war ausgezeichnet.

Beispiel 25

Beispiel 24 wurde unter Verwendung einer käuflichen Fleischemulsion für Bologneser Würstchen wiederholt, wobei 3 % Cellulose bezogen auf das Endprodukt zugesetzt wurden. Verglichen mit den gleichen Würstchen, hergestellt ohne Cellulose, besaßen die resultierenden Würstchen bologneser Art einen verbesserten Geschmack und eine verringerte Ausbildung von Fettaschen, die eine der Hauptprobleme in der Fleischindustrie sind. Das Produkt war auch saftiger und behielt den Geschmack besser bei als der Vergleich.

Beispiel 26

Ein geschlagener Dessertüberzug geringen Kaloriengehalts wurde durch Mischen von 2,2 % Zellstoff, 6 % Zucker, 8 % Sojabohnenöl und 83,8 % Wasser hergestellt. Die gemischten Bestandteile bildeten eine Aufschlämmung, die 10 mal bei 55 120 kPa einen Homogenisator passieren gelassen wurde. Man erhält einen geschlagenen Überzug, von glatter, dichter Beschaffenheit. Man kann ihn ggf. noch weiter in einem Mischer schlagen.

Beispiele 27 und 28

Eine Reihe von Überzügen, Füllungen, Saucen und Puddings wurden nach einer oder beiden von zwei Verfahren hergestellt :
1) Mischen sämtlicher Bestandteile, Cellulosezellstoff eingeschlossen, Wasser und Nahrungsmittelbestandteile, gefolgt vom Durchgang der Mischung durch einen Homogenisator und in situ Erzeugung der mikrofibrillierten Cellulose nach dem erfindungsgemäßen Verfahren.
2) Das zweite Verfahren besteht darin, daß man zuerst die mikrofibrillierte Cellulose herstellt und dann deren Aufschlemmung mit den Nahrungsmittelzusätzen vermischt.
Beide Verfahren verwendeten die gleiche Fasergröße der Cellulose in einer 2 %igen Aufschlämmung in Wasser als Ausgangsmaterial und beide Verfahren beinhalten den Durchgang der entsprechenden Aufschlämmungen durch einen Homogenisator mit einem Druckabfall von 55 120 kPa, der Vorgang wurde 10 mal wiederholt, dann war ein stabiler Gelpunkt erreicht. Die Anfangstemperatur der Verfahren betrug jeweils 25 °C. Mit diesen Beispielen wurde ein Überzug geringen Kaloriengehalts (ohne Aromazusatz) aus einer Mischung bestehend aus 8 % Sojabohnenöl, 6 % Zucker, 2,2 % Cellulose und 83,8 % Wasser mittels der zwei Verfahren hergestellt. Nach dem Verfahren 1) wurden alle Bestandteile mit der Cellulose vermischt und das Material für den Überzug und die mikrofibrillierte Cellulose in einer Stufe hergestellt, in dem man die Mischung den Homogenisator passieren ließ. Nach dem Verfahren 2) wurde die Cellulose zuerst in den mikrofibrillierten Zustand übergeführt und dann das Öl zugesetzt und emulgiert. Der Zuckerzusatz erfolgte am Schluß. Es stellte sich heraus, daß das Verfahren 1) ein besseres Produkt lieferte, der Überzug nach dem Einstufenverfahren besaß eine glattere zusammenhängendere Konsistenz.

Beispiele 29 bis 31

Bei dieser Reihe von Beispielen wurden die gleichen zwei Verfahren zur Herstellung einer Reihe von Saucen und Puddings angewendet. Jedes der Produkte wurde aus einer neutralen Puddinggrundmischung bestehend aus 7 % fettarmer Trockenmilch, 0,13 % Carboxymethylcellulose, 1,86 % Sojabohnenöl, 2,32 % Cellulose und 88,69 % Wasser hergestellt.
Bei dem Verfahren 1 wurden alle Bestandteile gemeinsam in den Homogenisator eingegeben, beim Verfahren 2 wurde die Cellulose zuerst mikrofibrilliert und dann mit den anderen Bestandteilen vermischt. Beispiel 29 beinhaltet den nach den Verfahren 1 und 2 hergestellten Puddinggrundstoff. Beispiel 30 war ein Zitronenpudding, hergestellt nach beiden Verfahren aus der obigen Puddinggrundmasse, zu der Zitronensaft und Zucker zugefügt wurde. Beispiel 31 ist eine nach beiden Verfahren hergestellte Sauce, basierend auf dem gleichen Puddinggrundstoff, zu dem Zwiebelsuppe und eine Partysaucenmischung zugegeben wurden. Die Ergebnisse sämtlicher Beispiele waren weitgehend die gleichen, unabhängig von der verwendeten Methode. Das jeweilige Produkt war fest und glatt und faserförmiges Material war nur wenig oder überhaupt nicht wahrzunehmen.

## Beispiel 32

Beide Verfahren wurden wie schon in den Beispielen 29 bis 31 angegeben zur Herstellung einer Reihe von Füllungen. Gefrorenes Orangesaftkonzentrat, gesüßtes, gefrorenes Zitronenkonzentrat und gesüßtes, gefrorenes Grapefruitkonzentrat wurden entweder einer Aufschlämmung von 2 % mikrofibrillierter Cellulose oder einer 2%igen Aufschlämmung von Cellulose zugefügt, die dann fibrilliert wurde. Das Ergebnis war in jedem Fall eine Füllung in Form einer stabilen homogenen Suspension. Die nach dem Verfahren 1 und 2 hergestellten Füllungen mit Orangengeschmack waren nicht zu unterscheiden. Die Füllungen mit Zitronen- und Grapefruitgeschmack hatten ein etwas kräftigeres Fruchtaroma bei Herstellung nach Verfahren 2.

## Beispiel 33

Die beiden Verfahren wurden entsprechend Beispiel 1 und 2 bei der Herstellung einer Reihe von Suppen und Bratensaucen wiederholt. Die mikrofibrillierte Cellulose wurde als Eindicker angewendet, um den Suppen eine cremige Konsistenz und den Bratensaucen Gehalt zu geben. Der Gehalt an mikrofibrillierter Cellulose bei den Bratensaucen betrug 2 %, bei den Suppen war der Wert auf 0,75 % gesenkt. Hühnerbouillon und natürlicher Selleriesaft wurden als Zusätze bei der Herstellung von Hühnercremesuppe und Sellerie suppe verwendet. Zur Verbesserung des optischen Aussehens wurden in machen Fällen Lebensmittelfarben zugesetzt. Sowohl Verfahren 1 wie Verfahren 2 ergab Suppen guter Qualität. Bei der Selleriesuppe ergab sich etwas höherer Selleriegeschmack nach dem Verfahren 2. Keine Unterschiede wurden bei den Bratensaucen bemerkt. Beide Verfahren lieferten Produkte mit annehmbaren Geschmack, brauchbarer Farbe und Beschaffenheit.

In der kosmetischen Industrie, insbesondere in der Hautkosmetik werden einige wenige Grundmaterialien in verschiedene Ansätze auf Ölbasis eingearbeitet. Die meistgebrauchten Stoffe dieser Art sind Glyzerin und Propylenglykol, die als feuchtigkeitsspendende Bestandteile genutzt werden. Wird mikrofibrillierte Cellulose in Glyzerin oder Porpylenglykol hergestellt, so wird dem Feuchtigkeitsspender ausreichend Trägerkörper beigegeben, so daß teure Öle nicht erforderlich sind. Dies senkt nicht nur die Kosten, sondern stellt auch einer Vorteil bei der Regelung des Fettgehalts der Haut dar. Die durchscheinenden Mischungen Glyzerin-Cellulose und Propylenglykol-Cellulose ergeben eine stabile Suspension von glatter Konsistenz ganz ähnlich einer käuflichen Handcreme. Die hohe Absorbtionsfähigkeit der mikrofibrillierten Cellulose kann zusätzlich dazu benutzt werden, andere Stoffe als langsam abgebender Träger mitzuführen. Derartige Stoffe können bakteriostatika oder andere spezielle Hautpflegemittel sein.

## Beispiel 34

Eine zweiprozentige Aufschlämmung von Zellstoff in Glycerin wurde 12 mal 59 Sec lang bei 55 120 kPa einen Homogenisator bis zu einer Endtemperatur von 135 °C passieren gelassen. Es resultierte eine stabile Suspension von glatter Konsistenz ganz ähnlich der einer käuflichen Handcreme. Zu dieser Suspension können verschiedene dufterzeugende Stoffe, Lanolin, weichmachende Öle, Reinigungsstoffe oder Bakteriostatika zugefügt werden.

## Beispiel 35

Beispiel 27 wurde unter Verwendung von Propylenglykol als Flüssigkeitsträger wiederholt. Das resultierende Produkt ähnelte dem auf Glycerinbasis.

## Beispiel 36

Eine 2%ige Aufschlämmung von flaumigem Sulfitzellstoff in Wasser mit einem Gehalt von 0,5 % Natriumcarboxymethylcellulose ließ man 600 Sec oder 10 mal bis zu einer Endtemperatur von 100 °C bei 55 120 kPa einen Homogenisator passieren. Es resultierte eine dicke opake Paste mit ausgezeichneter Konsistenz, geeignet als Basis für kosmetische Creme, die zeigt, daß Wasser zusätzlich zu Glykol verwendet werden kann. Verschiedene Duftstoffe, Lanolin, weichemachende Öle, reinigende Stoffe oder Bakterizide können ebenso wie in Beispiel 27 zugefügt werden.

## Ansprüche

1. Suspension fein zerkleinerten Materialien in einem suspendierenden Medium, dadurch gekennzeichnet, daß das suspendierende Medium eine Flüssigkeit ist, die Cellulose zum Quellen bringt und mikrofibrillierte Cellulose in einer Menge, die eine ausreichend stabile homogene Suspension erzeugt, sowie gegebenenfalls ein hydrophiles Polymer enthält.

2. Suspension nach Anspruch 1, gekennzeichnet, durch einen Gehalt von 0,1 bis 25 Gew.% an mikrofibrillierter Cellulose.

3. Suspension nach Anspruch 2, dadurch gekennzeichnet, daß das suspendierende Medium Wasser ist.

4. Suspension nach den Ansprüchen 1 bis 3, dadurch gekennzeichnet, daß das fein zerkleinerte Material ein Feststoff ist.

5. Suspension nach den Ansprüchen 1 bis 3, dadurch gekennzeichnet, daß das fein zerkleinerte Material eine in dem suspendierenden Medium unlösliche Flüssigkeit ist.

6. Suspension nach Anspruch 1, dadurch gekennzeichnet, daß das hydrophile Polymer aus der Gruppe Celluloseester und -Äther, synthetisches Säurepolymer, natürlicher Gummi oder Stärke ausgewählt ist.

7. Verfahren zur Herstellung einer Suspension nach den Ansprüchen 1 bis 6, dadurch gekennzeichnet, daß eine zum Quellen von Cellulose verwendbare Flüssigkeit mit 0,1 bis 25 Gew.% faserförmiger Cellulose, einem hydrophilen Polymer und dem zu suspendierenden Stoff vermischt wird und diese Aufschlämmung wiederholt in einem Hochdruckhomogenisator einem Druckabfall von mindestens 20 685 kPa, einer Scherwirkung bei hoher Geschwindigkeit und einem Anprall aus dieser heraus ausgesetzt wird.

8. Verfahren zur Herstellung einer Suspension nach den Ansprüchen 1 bis 6, dadurch gekennzeichnet, daß faserförmige Cellulose unter Verwendung einer sie zum Quellen bringenden Flüssigkeit wiederholt in einem Hochdruckhomogenisator einem Druckabfall von 20 685 kPa, einer Scherwirkung bei hoher Geschwindigkeit und einem Aufprall aus dieser heraus ausgesetzt wird und die so erzeugte mikrofibrillierte Cellulose mit dem in Suspension zu bringenden Stoff vermischt wird.

## Claims

1. A suspension of finely divided materials in a suspending medium wherein the suspending medium being a liquid which provides swelling of cellulose and containing microfibrillated cellulose in such amount to produce a sufficiently stable homogenous suspension as well as containing in case a hydrophilic polymer.

2. A suspension according to claim 1 with a content of microfibrillated cellulose in the range of 0.1 to 25 percent by weight.

3. A suspension according to claim 2 wherein the suspending medium is water.

4. A suspension according to claims 1 to 3 wherein the finely divided material is a solid.

5. A suspension according to claims 1 to 3 wherein the finely divided material is a liquid which is immiscible in the suspending medium.

6. A suspension according to claim 1 wherein the hydrophilic polymer is selected from the group consisting of cellulose esters and ethers, synthetic acid polymers, natural gums and starches.

7. A process for the preparation of a suspension according to the claims 1 to 6 wherein the liquid suitable for swelling of cellulose is mixed with 0.1 to 25 percent of weight of fibrous cellulose, a hydrophilic polymer and with the material which should be suspended and that this slurry is repeatedly subjected in a high pressure homogenizer to a pressure drop of at least 20 685 kPa and to a high velocity shearing followed by a decelerating impact.

8. A process for the preparation of a suspension according to claims 1 to 6 wherein fibrous cellulose using a liquid which provides swelling of the cellulose is subjected repeatedly in a high pressure homogenisator to a pressure drop of 20 685 kPa to a high velocity shearing followed by a decelerating impact and that the microfibrillated cellulose processed in such manner is mixed with the material which is to be suspended.

## Revendications

1. Suspension de matières finement divisées dans un milieu de suspension, caractérisé en ce que le milieu de suspension est un liquide qui provoque le gonflement de la cellulose et contient une quantité de cellulose microfibrillée produisant une suspension homogène suffisamment stable, ainsi que, le cas échéant, un polymère hydrophile.

2. Suspension d'après la revendication 1, caractérisée par une teneur de 0,1 à 25 % en poids de cellulose microfibrillée.

3. Suspension d'après la revendication 2, caractérisée en ce que le milieu de suspension est de l'eau.

4. Suspension d'après les revendications 1 à 3, caractérisée en ce que la matière finement divisée est une matière solide.

5. Suspension d'après les revendications 1 à 3, caractérisée en ce que la matière finement divisée est un liquide insoluble dans le milieu de suspension.

6. Suspension d'après la revendication 1, caractérisée en ce que le polymère hydrophile est choisi dans le groupe des esters et des éthers de cellulose, dans les polymères d'acides synthétiques, le caoutchouc naturel ou l'amidon.

7. Procédé de fabrication d'une suspension d'après les revendications 1 à 6, caractérisé en ce qu'un liquide utilisable pour le gonflement de la cellulose est mélangé avec 1 à 25 % en poids de cellulose fibreuse, avec un polymère hydrophile et la matière à mettre en suspension, puis cette suspension est soumise à plusieurs reprises dans un homogénéisateur à haute pression à une chute de pression d'au moins 20 685 kPa, à un effort de cisaillement à vitesse élevée et à un choc à partir de celle-ci.

8. Procédé de fabrication d'une suspension d'après les revendications 1 à 6, caractérisé en ce que de la cellulose fibreuse, en utilisant un liquide qui provoque son gonflement, est soumise à plusieurs reprises dans un homogénéisateur haute pression à une chute de pression de 20 685 kPa, à un effort de cisaillement à vitesse élevée et à un choc à partir de celle-ci ; la cellulose microfibrillée ainsi obtenue est mélangée à la matière à mettre en suspension.